# DEMANDE DE BREVET EUROPEEN

(11) **EP 1 113 664 A1**
(43) Date de publication de la demande: **04.07.2001**
(21) Numéro de dépôt: 00403653.9
(22) Date de dépôt: 22.12.2000
(51) Int. Cl.: H04N 1/64

(54) **Procédé d'impression laser d'une image couleur**

(30) Priorité: 29.12.1999 FR 9916645
(71) Demandeur: SAGEM S.A., 75116 Paris (FR)
(72) Inventeur: Kuntzel, Etienne, 78600 Maisons Laffite (FR)
(74) Mandataire: Bloch, Gérard

(57) **Abrégé**

On effectue d'abord une analyse de l'image pour engendrer une pluralité d'images de couleurs primaires (1). On comprime à la volée (2) les données des images de couleurs primaires et on les mémorise (10, 20). On décomprime (30) les données du début d'une (21) des images de couleur primaire (21-24),
- on imprime les données décomprimées, en décomprimant concomitamment à la volée le reste de l'image (21) pour ensuite l'imprimer, et
- on procède de même pour les autres images de couleur primaire (22-24).

## Description

La présente invention concerne l'impression par une imprimante laser d'images en couleurs.

Un dispositif d'analyse couleur de l'image d'un document, ou scanner, fournit de façon classique trois images numériques du document dans les couleurs primaires d'analyse que sont le rouge, le vert et le bleu. Comme, en pratique, les poudres d'impression, ou toner, des imprimantes sont mal adaptées à ces couleurs, les trois images ci-dessus sont converties en trois autres d'un autre espace de références de couleur, cyan, jaune et magenta, auxquelles on ajoute souvent le noir.

Pour l'impression d'une même page, une imprimante couleur à laser doit disposer en mémoire de la totalité des images numériques correspondantes car il est impossible de suspendre l'impression une fois celle-ci lancée. Il faut donc prévoir, en impression polychrome, quatre mémoires tampon de très grosse taille.

Comme en outre la résolution d'analyse et de restitution des images tend à s'accroître dans les nouveaux matériels, le volume mémoire à réserver à l'image, dans un scanner ou une imprimante, devient excessif et on ne peut économiquement l'accroître.

La présente invention vise à limiter le volume mémoire des imprimantes laser de couleur.

A cet effet, l'invention concerne un procédé d'impression en couleurs d'une image, dans lequel on effectue d'abord une analyse de l'image pour engendrer une pluralité d'images de couleurs primaires, on mémorise ces images et on les imprime, procédé caractérisé par le fait qu'on comprime à la volée les données des images de couleurs primaires avant de les mémoriser.

Avantageusement, après mémorisation,
- on décomprime les données du début d'une des images de couleur primaire,
- on imprime les données décomprimées, en décomprimant concomitamment à la volée le reste de l'image pour ensuite l'imprimer, et
- on procède de même pour les autres images de couleur primaire.

La partie décomprimée d'image ne représente ainsi qu'une fraction de l'image totale et le volume mémoire nécessaire reste donc limité à la mémoire de stockage des images comprimées alimentant un tampon d'impression contenant une portion d'image décomprimée.

Dans le cas d'une imprimante séquentielle, à une seule tête laser et à plusieurs passes, on enchaîne les impressions des images de couleur, en décomprimant les données du début d'une nouvelle image de couleur à imprimer dès qu'on imprime la fin de l'image de couleur précédente.

Cet enchaînement des impressions des images aux diverses couleurs évite ainsi toute perte de temps et permet d'utiliser de façon optimale une mémoire tampon d'impression.

Dans le cas d'une imprimante à plusieurs têtes laser, dite tandem, on décomprime les données des débuts de toutes les images de couleur primaire en synchronisme pour une impression parallèle.

Les diverses images de couleur sont alors imprimées simultanément, au décalage temporel près dû à l'espacement des têtes.

Dans les deux cas, l'invention permet l'impression selon un flot continu de données.

L'invention sera mieux comprise à l'aide de la description suivante d'une forme préférée de mise en oeuvre du procédé de l'invention, en référence au dessin annexé, sur lequel :

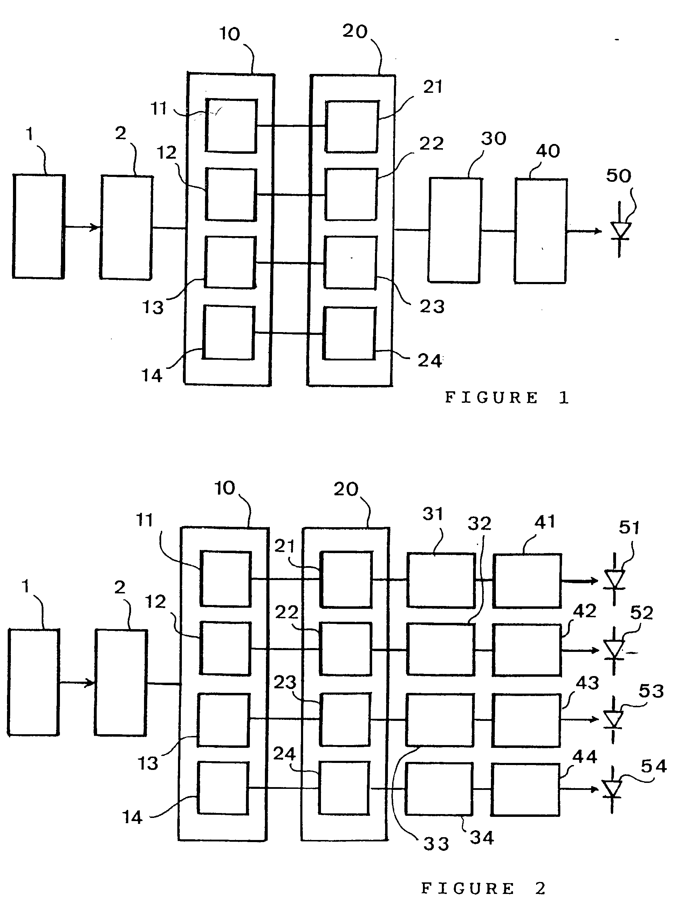

- les figures 1 et 2 illustrent respectivement les étapes d'impression d'une imprimante séquentielle et d'une imprimante tandem.

La référence 1 désigne un scanner fournissant des données d'image trame en couleurs, au format ou espace de référence KCMY de couleurs primaires (Noir, Cyan, Magenta, Jaune). Les données au format KCMY sont comprimées à la volée, dans un circuit de traitement 2, au format JBIG (Joint Bi-level Image Expert Group, ISO 11544), sans perte d'information, pour ensuite être mémorisées et commander, ici par 1 bit pour chaque pixel de couleur, une tête à diode laser d'impression, qui porte la référence 50 sur la figure 1 et est unique, pour une impression séquentielle. Il existe des circuits, pilotant directement la diode laser, permettant d'effectuer la modulation de taille de point. En affectant plus de 1 bit par pixel, on peut faire varier le diamètre du pixel imprimé. Cette modulation de la taille du point permet d'améliorer fortement la qualité d'impression.

La référence 10 désigne une mémoire tampon comportant un ensemble de quatre tampons 11, 12, 13, 14 dans lesquels sont respectivement stockées les données des images couleur JBIG aux quatre couleurs ci-dessus (en assimilant le noir à une couleur), représentant une page d'un document. Une page précédente est stockée dans une mémoire tampon 20, avec quatre tampons 21 à 24, identique à la mémoire tampon 10 et en aval de celle-ci.

La référence 30 désigne des circuits de lecture et de décompression des données de la mémoire tampon 20, reliés en sortie à une mémoire tampon 40 commandant la tête laser 50.

Le séquencement des opérations d'impression va maintenant être explicité plus en détails.

On effectue d'abord une analyse de l'image à imprimer pour engendrer la pluralité de quatre images de couleurs primaires KCMY et, comme indiqué, on comprime à la volée, dans les circuits 2, les données des images de couleurs primaires avant de les mémoriser en mémoire tampon 10, de réserve de données, puis de les transférer à la mémoire tampon 20, de commande d'impression. Dans ce qui suit, les contenus des tampons sont désignés par les références de ceux-ci entre parenthèses.

Par lecture dans la mémoire tampon 20, on décomprime par les circuits 30 les données de début d'une (21) des images de couleur primaire des tampons 21 à 24, on imprime par la tête laser 50 les données décomprimées, en décomprimant concomitamment à la volée le reste de l'image (21) pour ensuite l'imprimer et on procède de même pour les autres images de couleur primaire (22 à 24).

Dans le cas de l'imprimante séquentielle de la figure 1, on enchaîne les impressions des images de couleur (21 à 24) en décomprimant les données du début d'une nouvelle image de couleur à imprimer (22) dès qu'on imprime la fin de l'image de couleur précédente (21).

Par début ou fin d'image, on entend une bande d'image correspondant à la taille de la mémoire tampon 40, ici de 0,5 M octet. Les tampons 11 à 14 et 21 à 24, plus ou moins remplis selon le taux de compression, ont chacun une taille maximale de 2 M octets.

La tête laser 50 est ainsi commandée dès que la mémoire tampon 40 est pleine et on poursuit le remplissage de celle-ci à la volée, par de nouvelles données décomprimées de l'image en cours d'impression du tampon 21, au rythme du vidage de la mémoire tampon 40 par lecture et impression.

Lorsque toute l'image en tampon 21 a été décomprimée et que la mémoire tampon 40 contient la fin de celle-ci, les circuits 30 effectuent immédiatement un passage de la lecture au tampon suivant 22 pour alimenter la mémoire tampon 40 par les données d'image correspondantes décomprimées et ainsi éviter une rupture du flot d'approvisionnement en données de la tête 50. Le processus se poursuit jusqu'à l'impression des quatre images en mémoire tampon 20.

Le contenu de la mémoire tampon 10 est alors vidé dans la mémoire tampon 20, pour l'impression de la page suivante.

La figure 2, qui concerne une imprimante tandem à quatre unités d'impression, reprend les éléments de la figure 1 avec leurs fonctions, les circuits 30 de décompression en série des quatre images (21 à 24) étant toutefois remplacés par quatre circuits, semblables, de décompression 31, 32, 33 et 34, en parallèle, traitant chacun une image couleur spécifique (21 à 24) et commandant respectivement quatre têtes laser 51, 52, 53 et 54 à travers quatre mémoires tampons 41, 42, 43 et 44.

Les circuits 31 à 34 fonctionnent simultanément, en synchronisme, pour commander une impression parallèle par les quatre têtes laser 51 à 54.

Compte tenu de l'espacement entre têtes laser 51 à 54 le long du trajet de la feuille à imprimer et de la vitesse de défilement de celle-ci, chacun des circuits de décompression 31 à 34 a en fait un fonctionnement temporellement décalé par rapport aux autres, pour cadrer son image particulière par rapport aux autres. Le cadrage est en fait réglé au niveau de quatre circuits de lecture des tampons 41 à 44 et les séquencements des circuits de décompression 31 à 34 sont asservis par les lectures dans les tampons 41 à 44, qui libèrent de la place dans ceux-ci.

## Revendications

1. Procédé d'impression en couleurs d'une image, dans lequel on effectue d'abord une analyse de l'image pour engendrer une pluralité d'images de couleurs primaires (1), on mémorise ces images et on les imprime, procédé caractérisé par le fait qu'on comprime à la volée (2) les données des images de couleurs primaires avant de les mémoriser (10, 20).

2. Procédé selon la revendication 1, dans lequel :
- on décomprime (30; 31-34) les données du début d'une (21) des images de couleur primaire (21-24,
- on imprime les données décomprimées, en décomprimant concomitamment à la volée le reste de l'image (21) pour ensuite l'imprimer, et
- on procède de même pour les autres images de couleur primaire (22-24).

3. Procédé selon la revendication 2, dans lequel on enchaîne les impressions des images de couleur (21-24), en décomprimant les données du début d'une nouvelle image de couleur à imprimer (22) dès qu'on imprime la fin de l'image de couleur précédente (21).

4. Procédé selon la revendication 2, dans lequel on décomprime les données des débuts de toutes les images de couleur primaire (31-34) en synchronisme pour une impression parallèle (51-54).
